# EUROPEAN PATENT APPLICATION

(11) **EP 2 899 683 A1**
(43) Date of publication of application: **29.07.2015**
(21) Application number: 13839644.5
(22) Date of filing: 20.09.2013
(51) Int. Cl.: G06Q 50/04

(54) **UNIQUE CODE ISSUING METHOD AND ISSUING SYSTEM THEREFOR**

(30) Priority: 24.09.2012 JP 2012209589
(71) Applicant: Nitto Denko Corporation, Ibaraki-shi, Osaka 567-8680 (JP)
(72) Inventor: NII Nobuhiko, Ibaraki-shi Osaka 567-8680 (JP)
(74) Representative: Grünecker Patent- und Rechtsanwälte PartG mbB
(86) International application number: PCT/JP2013/075570
(87) International publication number: WO 2014/046262

(57) **Abstract**

Provided is a unique code issuing system that makes it possible for each company to easily and reliably perform identification management of solid objects. Issue requests for unique codes from a plurality of independent request sources (request servers (21, 31, 41)) are received by a reception server (11). When issuing a unique code, a UC-issuing server (12) consults a storage database (13) in which previously issued unique codes are stored. The UC-issuing server (12) randomly issues a new, one-of-a-kind unique code that differs from the previously issued unique codes. The issued unique code is then stored as a previously issued unique code in the storage database (13).

## Description

### Technical Field

The present invention relates to a unique code issuing method for issuing a unique code and an issuing system therefor.

### Background Art

Conventionally, for example, for the purpose of individuals management of manufactured products, manufacturers impart product identification numbers such as serial numbers to individual products. By using these product identification numbers, manufacturers manage the date of manufacture, the place of manufacture, the production line, the distribution destination, or the like of the products in each manufacturer.

### Summary of Invention

### Technical Problem

Nevertheless, each manufacturer manages the products by using serial numbers generated independently by each manufacturer. Thus, for example, at the time of merger of two manufacturers, in order that the products of the individual manufacturers may be managed in common, a large amount of labor has been necessary such that databases are shared or new numbers are re-imparted to the products.

Thus, an object of the present invention is to provide a unique code issuing method and an issuing system in which each company can easily and reliably perform identification management of individuals.

### Solution to Problem

In order to solve the above-mentioned problem, a unique code issuing method according to the present invention includes: an issued data accumulation step of accumulating already-issued unique codes; and a unique code issuing step of issuing to a requesting source a new unique code different from the accumulated unique codes.

Further, in the unique code issuing method of the present invention, it is preferable that the unique codes are issued to a plurality of independent requesting sources in the unique code issuing step.

Further, in the unique code issuing method of the present invention, it is preferable that the unique code is constructed from a character string having a predetermined number of characters including numeric characters and symbols.

Further, in the unique code issuing method of the present invention, it is preferable that the new unique code in the unique code issuing step is issued at random.

Further, in the unique code issuing method of the present invention, it is preferable that as the new unique code in the unique code issuing step, a unique code is issued that is irrelevant to the unique code issued immediately before.

Further, a unique code issuing system according to the present invention includes: an accumulation database in which already-issued unique codes are accumulated; and a unique code issuing server that issues a new unique code different from the already-issued unique codes accumulated in the accumulation database in response to an issuance request for new unique code, and then accumulates the issued unique code as an already-issued unique code into the accumulation database.

Further, in the unique code issuing system of the present invention, it is preferable to further include a reception server that receives issuance requests for new unique codes from a plurality of independent requesting sources.

Further, in the unique code issuing system of the present invention, it is preferable that the unique code issuing server issues a unique code constructed from a character string having a predetermined number of characters including numeric characters and symbols.

Further, in the unique code issuing system of the present invention, it is preferable that the unique code issuing server issues the new unique code at random.

Further, in the unique code issuing system of the present invention, it is preferable that the unique code issuing server issues as the new unique code a unique code irrelevant to the unique code issued immediately before.

Further, in the unique code issuing system of the present invention, it is preferable that the unique code issuing server is inhibited from issuance of identical unique codes.

### Advantageous Effects of Invention

According to the present invention, for example, a situation is avoided that identical unique codes are issued in a duplicated manner as a series of unique codes to be issued over a plurality of customers serving as requesting sources. Thus, these manufacturers can manage individual products by using unique codes not duplicated to each other. Further, even when merger or the like has caused the necessity that a plurality of customers manage individual products under a common management regime, since the unique codes provided to the individual customers are not duplicated to each other, reconstruction of the management system is unnecessary and management of the individual products can be continued by using the unique codes having already been provided.

### Brief Description of Drawings

FIG. 1 is a diagram showing a configuration of a unique code issuing system according to the present invention.
FIG. 2 is a diagram showing specific examples of a printed unique code where a two-dimensional bar code (a data matrix) is attached in (a), a two-dimensional bar code (a QR code (registered trademark)) is attached in (b), and a one-dimensional bar code is attached in (c).
FIG. 3 is a flowchart showing an example of procedure of unique code issuance.
FIG. 4 is a diagram showing management performed at the time of merger of a customer A and a customer B serving as an example of products management using unique codes, where (a) shows management performed by the customer A before the merger, (b) shows management performed by the customer B before the merger, and (c) shows management performed by the customer A after the merger.

### Description of Embodiments

An example of embodiments of the unique code issuing system and the issuing method therefor according to the present invention is described below with reference to the accompanying drawings.

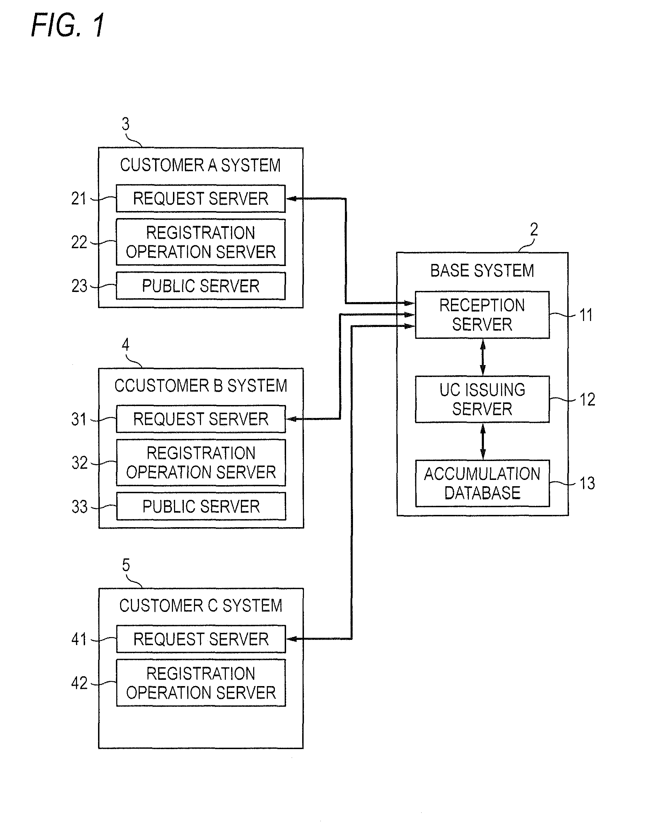

FIG. 1 shows a unique code issuing system 1 for issuing a unique code (UC). The unique code issuing system 1 includes: a base system 2; and a plurality of customer systems (e.g., a customer A system 3, a customer B system 4, and a customer C system 5) connected through a network such as the Internet to the base system 2.

The base system 2 is a system on the side of providing the unique code. The base system 2 issues a unique code when received a request from the customer. The base system 2 includes a reception server (e.g., a Web server) 11, a UC issuing server 12, and an accumulation database 13.

Here, the unique code indicates a code which is unique and issued from the UC issuing server 12. Further, the unique code is managed by the UC issuing server 12 such that each code appears alone in the world. The unique code is constructed from a character string having a predetermined number of characters including numeric characters and symbols. Here, when the number of characters of the character string serving as a unique code has been set to be a particular number of characters, the unique code used in the unique code issuing system is always a character string consisting of this particular number of characters.

Specifically, for example, the unique code may be a character string consisting of 11 characters selected from ten numeric characters from "0" to "9" and 26 alphabets from "A" to "Z". Here, in this case, it is preferable to employ 33 alphabetical and numeric characters excluding three characters easily causing erroneous recognition and consisting of "I (an alphabet)" (erroneous recognition with a numeric character 1), "O (an alphabet)" (erroneous recognition with a numeric character 0), and "Z (an alphabet)" (erroneous recognition with a numeric character 2). When a character string consisting of 11 characters selected from the 33 characters is to be generated, 33¹¹ kinds (approximately 50 quadrillion 542 trillion pieces) of unique codes can be issued. The character string and the number of characters used for the unique code are not limited to particular ones. However, the following description is given for an example in which a character string consisting of 11 characters selected from the characters of 33 kinds is adopted as the unique code.

The reception server 11 receives, through the network, requests from a plurality of independent requesting sources (the customer A system 3, the customer B system 4, the customer C system 5, and the like). Further, the reception server 11 transmits unique codes issued by the UC issuing server 12, through the network to the customer. The reception server 11 has the function of a Web server on the base system side for accumulating communication information such as documents and images and then transmitting such communication information through the network in response to requests from the customers.

Based on issuance requests from the customers received by the reception server 11, the UC issuing server 12 issues new unique codes. The issuing method for unique codes is described later.

In response to a request from a customer, the UC issuing server 12 issues a unique code and then transmits it to the reception server 11. Further, the UC issuing server 12 stores the correspondence relationship between the issued unique code and the customer of requesting source. Further, the UC issuing server 12 accumulates the issued unique code as an already-issued unique code into the accumulation database 13.

The customer systems (the customer A system 3, the customer B system 4, and the customer C system 5) are systems for requesting issuance of unique codes. The customer systems are constructed for individual customers. The customer A system 3 includes a request server 21, a registration operation server 22, and a public server 23. Further, the customer B system 4 includes a request server 31, a registration operation server 32, and a public server 33. Further, the customer C system 5 includes a request server 41 and a registration operation server 42.

Customers who construct customer systems include so-called companies such as manufacturing industry (manufacturers) and trading companies as well as medical corporations, agricultural corporations, educational corporations, religious corporations, government organizations, local governments, private shops, and associations.

The request servers 21, 31 and 41 transmit requests for issuance of unique codes, through the network to the base system 2. Further, the request servers 21, 31 and 41 receive issued unique codes transmitted from the reception server 11 of the base system 2.

The request servers 21, 31 and 41 may be terminals capable of communication through the network, like personal computers (PCs), smartphones, portable phones, and portable information terminals.

The registration operation servers 22, 32 and 42 are servers for registering purchased unique codes and then operating the unique codes. The registration operation servers 22, 32 and 42 are operated independently by the customers. For example, when the registration operation servers 22, 32 and 42 are operated by manufacturers who manufacture and sell products, correspondence relationship between unique codes and products to which the unique codes are imparted is registered in the registration operation servers 22, 32 and 42.

For example, the public servers 23 and 33 accumulate public information concerning products to which unique codes are imparted. For example, information concerning a product contains a product number, a date of manufacture, a sales date of the product, and a dealer name. These information pieces are transmitted through the network in response to a request from the user. The information on the public servers 23 and 33 is information to be disclosed to each customer and hence the contents are determined for each customer. Thus, like the case of the customer C shown in the figure, a system may be constructed that does not include a public server and does not disclose the management information of the product. Further, a public server may be added to the system later.

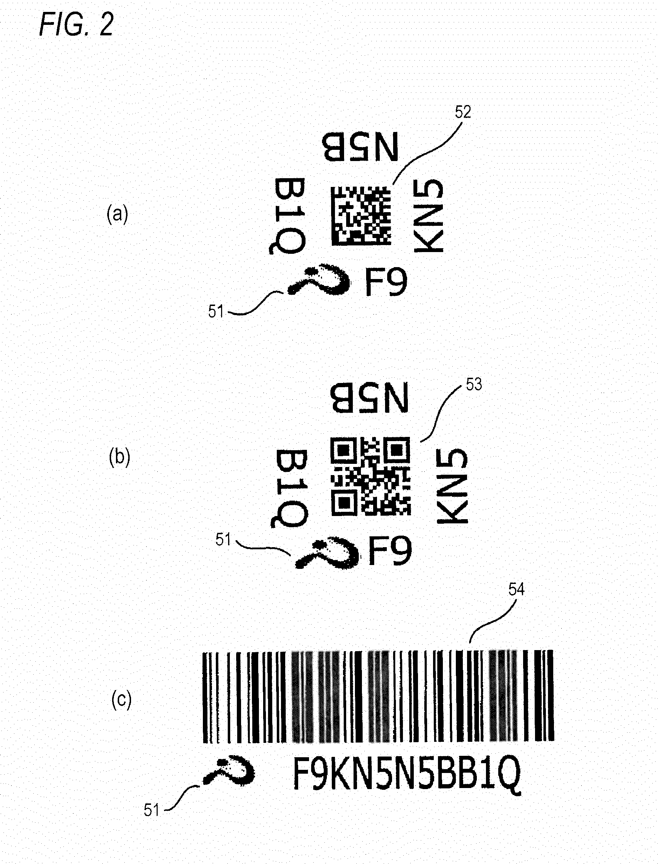

FIG. 2 shows specific examples of the unique code provided from the base system 2 side to the customer system (the customer A system 3, the customer B system 4, or the customer C system 5) side. As described above, the unique code is constructed from a predetermined character string having a predetermined number of characters.

In these examples, the issued unique code is "F9KN5N5BB1Q" and is a code of 11 characters. In the example of FIG. 2(a), "F9KN5N5BB1Q" is displayed together with a mark (e.g., a logo) 51 and a two-dimensional bar code (a Data Matrix) 52 indicating the unique code.

Further, in the example of FIG. 2(b), the unique code is displayed together with a mark 51 and a two-dimensional bar code (a QR (Quick Response) code) 53. In the example of FIG. 2(c), the unique code is displayed together with the mark 51 and a one-dimensional bar code 54. Here, as other examples of the two-dimensional bar code, Maxi Code as well as PDF417, CODE49, and CODE16K which are of stack type may be employed.

The mark 51 is display used by the base system 2 side for guaranteeing that the issued unique code "F9KN5N5BB1Q" is a unique code used in the unique code issuing system 1. Further, the mark 51 is a mark indicating the character position of the beginning of the unique code. In this example, the character "F" located adjacent to (on the right side of) the mark 51 is indicated to be the beginning.

Here, in this example, the mark 51 has been shown that is written together when the unique code is written with displayable characters "F9KN5N5BB1Q". However, for example, in a case that the bar code alone is written without writing displayable characters, the mark 51 is arranged at an arbitrary position in the bar code periphery.

Further, the design of the mark 51 is not limited to that shown in the example and may be one generated independently by the customer side. In this case, in order that the unique code with which the mark 51 is written together may be guaranteed to be unique, it is preferable that the mark is registered on the base system 2 side.

The unique code constructed in this way is converted into the form of data and then provided as file data through the network to the customer of requesting source. In this case, the unique code "F9KN5N5BB1Q" alone obtained by deleting the mark 51 and the bar codes 52, 53 and 54 may be provided through the network. Further, a configuration may be employed that the unique code is printed into the form of a label like in the specific examples given above instead of merely using the unique code as data and then the label is provided to the customer.

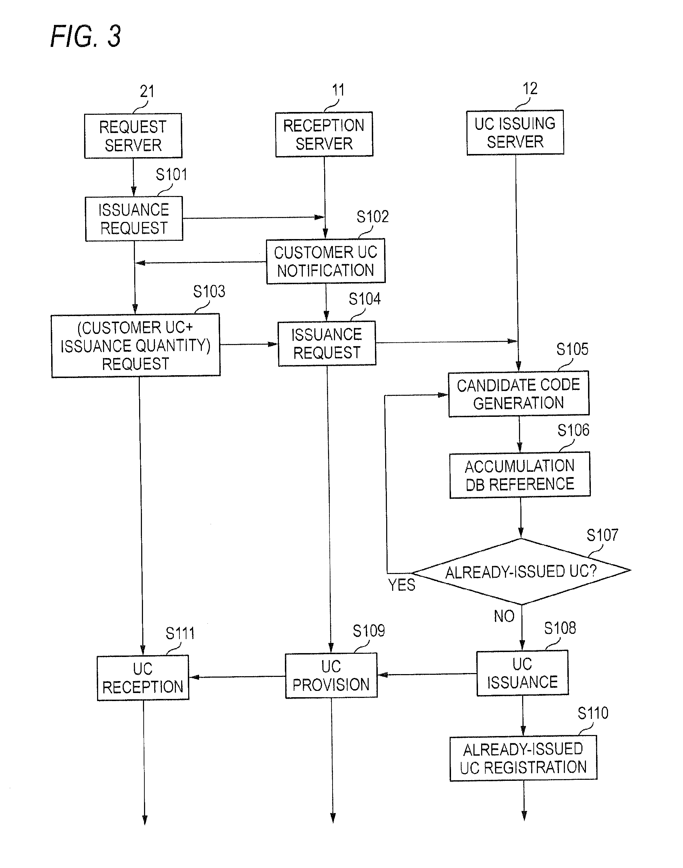

Next, an example of a processing procedure of unique code issuance is described below with reference to the flow chart shown in FIG. 3.

First, the request server of the customer system (premised to be the request server 21 of the customer A system 3, in the following description) transmits an issuance request for unique code through the network to the reception server 11 of the base system 2 (step S101).

The reception server 11 having received the issuance request imparts a customer unique code (a customer UC) used for identification of the customer A and then transmits it to the request server 21 of the customer A of requesting source (step S102). The customer UC is a code determined by the base system 2 side.

The request server 21 having received the customer UC transmits a request concerning the issuance quantity of the unique codes, together with the customer UC to the reception server 11 (step S103). Here, in the case of a customer to whom a customer UC has already been imparted, the steps S101 and S102 may be omitted and hence the customer UC and a request concerning the issuance quantity may directly be transmitted to the request server 21.

The reception server 11 having received the request concerning the issuance quantity transmits the received contents (the customer UC and the issuance quantity) to the UC issuing server 12 and thereby requests issuance (step S104).

The UC issuing server 12 having received the issuance request generates a code serving as a candidate of the unique code at random (step S105). For example, the UC issuing server 12 may include a random number generator and then a code generated by the random number generator may be adopted as a candidate code.

For example, the code serving as a candidate is constructed from a character string consisting of 11 characters and is generated at random from the 33 alphabetical and numeric characters prepared in advance. In particular, at the time of generation of a candidate code, it is preferable to generate a candidate code irrelevant to the unique code issued immediately before or to the candidate code generated immediately before.

Then, with reference to the accumulation database 13 (step S106), the UC issuing server 12 judges whether a code identical to the candidate code generated at step S105 is included in the already-issued unique codes accumulated in the accumulation database 13 (step S107).

When judged that a code identical to the candidate code is included in the already-issued unique codes accumulated in the accumulation database 13 (step S107: Yes), the UC issuing server 12 returns to step S105 again so as to generate a candidate code again.

When judged that a code matching with the candidate code is not included in the already-issued unique codes accumulated in the accumulation database 13 (step S107: No), the UC issuing server 12 issues the candidate code as a new unique code (S108) and then provides the unique code through the reception server 11 to the request server 21 (step S109). Further, the UC issuing server 12 accumulates the newly issued unique code as an already-issued unique code into the accumulation database 13 (step S110). By virtue of this, a new unique code is issued that is different from the already-issued unique codes accumulated in the accumulation database 13.

Further, the UC issuing server 12 accumulates the unique code into the accumulation database 13, in correspondence to the customer A of requesting source (step S110). As the correspondence to the customer, for example, the issued unique code and the customer UC of requesting source may be registered into the accumulation database 13 in a manner of being related to each other. By virtue of this registration and accumulation processing, the accumulation database 13 is updated into new contents.

The customer A who has requested a unique code receives the unique code in the request server 21 (step S111). Then, the processing of unique code issuance is completed. Here, when the customer has requested a plurality of unique codes collectively, a file in which a plurality of unique codes are collected may be received in a manner of being downloaded into the request server 21.

As such, according to the unique code issuing system 1 of the present embodiment, the UC issuing server 12 avoids issuance of identical unique codes and hence can issue new unique codes different from the already-issued unique codes accumulated in the accumulation database 13, that is, unique codes without duplication. Thus, for example, the customer can perform products management by using the provided unique codes.

Further, in order to guarantee that a code identical to the already-issued unique codes accumulated in the accumulation database 13 is not issued as a unique code, the UC issuing server 12 may be constructed such that issuance of a code identical to the codes accumulated in the accumulation database 13 is inhibited.

For example, the following configuration may be employed. Before transmitting the to-be-issued unique code to the reception server 12, the UC issuing server 12 again refers to the already-issued unique codes accumulated in the accumulation database 13. Then, when an identical code is accumulated in the accumulation database 13, issuance of the code as a unique code is cancelled and then the procedure returns to the generating step for a candidate code (step S105) again.

Here, the embodiment given above has been described for an example that newly issued unique codes are accumulated in the accumulation database 13 and then the UC issuing server 12 issues as a unique code a code not accumulated in the accumulation database 13. However, the present invention is not limited to this example.

For example, the accumulation database 13 may accumulate in advance a plurality of codes as candidates of unique codes and then the UC issuing server 12 may select one at random from the codes accumulated in the accumulation database 13 so as to issue it as a new unique code. In this case, the code having been issued as a new unique code is deleted from the accumulation database 13. Alternatively, in place of deleting from the accumulation database 13 the code having been issued as a unique code, an issuance-done flag may be imparted to the issued code such that an identical code is prevented from being issued as a new unique code.

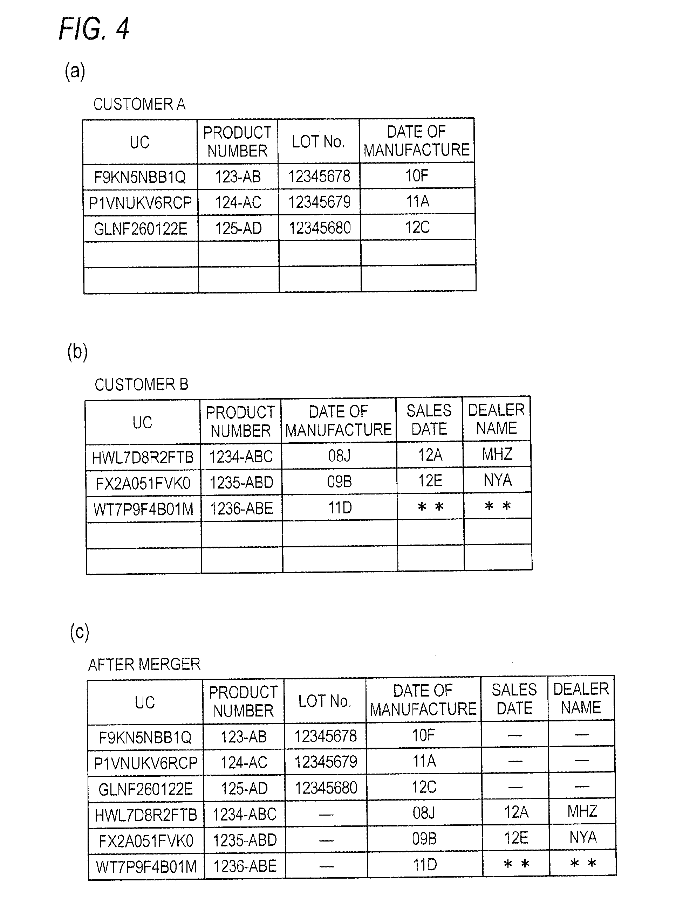

Next, an example of a products management method using unique codes is described below with reference to FIG. 4.

FIG. 4 is a diagram showing an example of products management performed when two manufacturers consisting of a customer A and a customer B are merged into one. It is premised that before the merger, the customer A and the customer B have individually acquired unique codes issued by the system and the method described above and then independently performed management by imparting the unique codes to the products of the own companies.

As shown in FIG. 4(a), before the merger, the customer A has performed management by imparting to the product a product number, a lot number, and a date of manufacture generated by oneself, in a manner of being related to the unique code (UC). On the other hand, as shown in FIG. 4(b), before the merger, the customer B also has performed management by imparting to the product a product number, a date of manufacture, a sales date, and a dealer name generated by oneself, in a manner of being related to the unique code (UC).

Here, the case that the customer A and the customer B are merged into one is investigated. As shown in FIG. 4(c), after the merger, when the databases individually owned by the customer A and the customer B before the merger are merely complemented with each other, products management can be continued on the basis of the unique codes which are unique and acquired individually by both customers. At that time, without the necessity of generating an additional database, products management can be continued by using the existing systems. This reduces the load of unifying the quality control systems.

Here, in this example, the customer A has performed management in a manner that a lot number is related to the unique code but the customer B has performed management in a manner that a lot number is not related to the unique code. As such, the customers A and B independently adopt own management methods and hence the management items are usually different between the customers. However, in a case that management is performed by using the unique codes provided by the unique code issuing system 1 and the issuing method according to the present embodiment, the item of unique code is always in common between the customers A and B and the unique codes are not duplicated to each other. Further, the unique code issuing system 1 guarantees avoidance of duplicated identical unique codes. Thus, as described above, when the databases individually managed by the customers A and B are merely complemented with each other, management can be continued.

This situation holds in a case that the products dealt by the customer A and the products dealt by the customer B are of the same kind as well as in a case that the products are completely of different kinds. That is, in both cases, all products can be managed by using the unique codes which are unique and imparted to the products. Thus, the customers can remarkably reduce the cost of quality control.

As such, according to the unique code issuing system 1 and the issuing method of the present embodiment, a situation is avoided that identical unique codes are issued in a duplicated manner as a series of unique codes to be issued over a plurality of customers serving as requesting sources. Thus, these customers can manage individual products by using unique codes not duplicated to each other. Further, even when merger or the like has caused the necessity that a plurality of customers manage individual products under a common management regime, since the unique codes provided to the individual customers are not duplicated to each other, reconstruction of the management system is unnecessary and management of the individual products can be continued by using the unique codes having already been provided.

Here, the embodiment given above has been described for an example that an issuance request from the customer is received through the network by the reception server 11 so that a unique code is issued. Instead, the unique code may be issued without intervention of the reception server 11. In this case, the customer may send issuance of a unique code directly to a contact point of the unique code issuer and then the customer may receive a unique code at the contact point.

In the example described above, a unique code of 11 characters has been employed. However, the number of characters is not limited to this.

Further, the present invention is not limited to the configurations described in the embodiment and the modification given above. That is, configurations in which various changes other than this are made may be employed.

The present application is based on Japanese patent application No. 2012-209589 filed on September 24, 2012, the contents of which are incorporated herein by reference.

### Reference Signs List

1: unique code issuing system, 2: base system, 3: customer A system, 4: customer B system, 5: customer C system, 11: reception server, 12: UC issuing server, 13: accumulation database, 21, 31, 41: request server, 22, 32, 42: registration operation server, 23, 33: public server

## Claims

1. A unique code issuing method comprising:
an issued data accumulation step of accumulating already-issued unique codes; and
a unique code issuing step of issuing to a requesting source a new unique code different from the accumulated unique codes.

2. The unique code issuing method according to claim 1, wherein the unique codes are issued to a plurality of independent requesting sources in the unique code issuing step.

3. The unique code issuing method according to claim 1 or 2, wherein the unique code is constructed from a character string having a predetermined number of characters including numeric characters and symbols.

4. The unique code issuing method according to any one of claims 1 to 3, wherein the new unique code in the unique code issuing step is issued at random.

5. The unique code issuing method according to any one of claims 1 to 3, wherein as the new unique code in the unique code issuing step, a unique code is issued that is irrelevant to the unique code issued immediately before.

6. A unique code issuing system comprising:
an accumulation database in which already-issued unique codes are accumulated; and
a unique code issuing server that issues a new unique code different from the already-issued unique codes accumulated in the accumulation database in response to an issuance request for new unique code, and then accumulates the issued unique code as an already-issued unique code into the accumulation database.

7. The unique code issuing system according to claim 6, further comprising
a reception server that receives issuance requests for new unique codes from a plurality of independent requesting sources.

8. The unique code issuing system according to claim 6 or 7, wherein the unique code issuing server issues a unique code constructed from a character string having a predetermined number of characters including numeric characters and symbols.

9. The unique code issuing system according to any one of claims 6 to 8, wherein the unique code issuing server issues the new unique code at random.

10. The unique code issuing system according to any one of claims 6 to 8, wherein the unique code issuing server issues as the new unique code a unique code irrelevant to the unique code issued immediately before.

11. The unique code issuing system according to any one of claims 6 to 10, wherein the unique code issuing server is inhibited from issuance of identical unique codes.
